# EUROPEAN PATENT SPECIFICATION

(11) **EP 2 623 580 B1**
(45) Date of publication and mention of the grant of the patent: **23.08.2017**
(21) Application number: 11828519.6
(22) Date of filing: 21.04.2011
(51) Int. Cl.: C09K 11/08, C09K 11/64

(54) **PROCESS FOR PRODUCTION OF BETA-SIALON**
VERFAHREN ZUR HERSTELLUNG VON BETA-SIALON
PROCÉDÉ DE PRODUCTION DE BETA-SIALON

(30) Priority: 27.09.2010 JP 2010215759
(43) Date of publication of application: 07.08.2013
(73) Proprietor: Denka Company Limited, Tokyo 103-8338 (JP)
(72) Inventor: EMOTO, Hideyuki, Machida-city Tokyo 194-8560 (JP)
(74) Representative: Gulde & Partner
(86) International application number: PCT/JP2011/059780
(87) International publication number: WO 2012/042957

(56) References cited:
- EP-A1- 1 964 905
- EP-A1- 2 093 272
- EP-A1- 2 213 711
- EP-A1- 2 365 047
- WO-A1-2007/066733
- WO-A1-2008/062781
- US-A1- 2007 108 896

## Description

### TECHNICAL FIELD

The present invention relates to a process for producing β-SiAlON to be used as a phosphor usable in luminescent devices employing blue light-emitting diodes or ultra-violet light-emitting diodes.

### BACKGROUND ART

The brightness of β-SiAlON remarkably improves by performing a heating treatment in a vacuum or under an inert atmosphere with low nitrogen partial pressure on β-SiAlON once synthesized, and performing acid treatment (WO 2008/062781 A).

EP 2 093 272 A1 discloses a method of producing β-SiAlON represented by Si_{6-z}Al_{z}O_{z}N_{8-z} : Eu, where z is 0 to 4.2. The method comprises a calcining step and a subsequent heat treatment in a temperature range of at least 1300°C and at most 1600°C in an inert gas atmosphere having a gas other than nitrogen as its main constituent.

EP 2 213 711 A1 discloses firing and subsequently annealing β-SiAlON in an atmosphere containing hydrogen at a temperature of 300 to 1000°C.

EP 1 964 905 A1 describes a manufacturing method of a phosphor comprising a nitride or oxynitride crystal having a β-type Si₃N₄ structure including Al and Eu, the method comprises firing a raw material mixture in a nitrogen atmosphere at a temperature of 1200 to 2200°C.

EP 2 365 047 A1 discloses a method of producing β-SiAlON comprising a heat-treatment of a raw material mixture at 1450°C in an argon/hydrogen or pure hydrogen atmosphere under atmospheric pressure, followed by acid-treatment.

### DISCLOSURE OF THE INVENTION

### Problems to be Solved by the Invention

The object of the present invention is to provide a process for producing a β-SiAlON having higher fluorescence intensity.

### Means for Solving the Problems

The present invention provides a process for producing a β-SiAlON phosphor, including: a mixing step of mixing a raw material powder containing silicon, aluminum and europium; a calcining step of calcining the raw material thus mixed under at atmosphere of inert gas or non-oxidizing gas to produce a β-SiAlON represented by the general formula: Si_{6-Z}Al_{z}O_{z}N_{8-z} : Eu (0 < z < 4.2); an annealing step of annealing the β-SiAlON thus produced; and an acid treatment step of soaking the β-SiAlON thus annealed in an acid solution, in which the annealing is performed under a reducing atmosphere at an atmospheric pressure of at least 0.15 MPa and no higher than 10 MPa, an atmospheric temperature of at least 1200°C and no higher than 1600°C, and for a treatment time of at least 1 hr and no longer than 24 hr.

It is preferable for the reducing atmosphere to be hydrogen gas. It is preferable for the reducing atmosphere to be a mixed gas of reducing gas and inert gas, and further preferable for a hydrogen gas concentration in the mixed gas to be at least 1% by volume.

It is preferable for the acid solution in the acid treatment step to be a mixed acid containing at least hydrofluoric acid and nitric acid.

It is preferable for calcining to be performed in an atmosphere at a temperature of at least 1850°C.

### Effects of the Invention

The present invention provides a β-SiAlON having higher fluorescence intensity by controlling the kind of atmosphere, pressure and temperature thereof, as well as the treatment time in the annealing step of a process for producing a β-SiAlON.

### BRIEF DESCRIPTION OF THE DRAWINGS

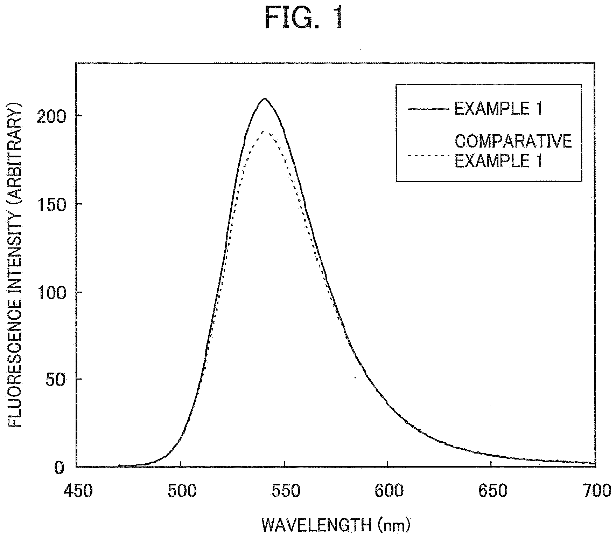

FIG. 1 is a graph showing the fluorescence spectra according to an external excitation light with a wavelength of 455 nm for Example 1 and Comparative Examples 1.

### PREFERRED MODE FOR CARRYING OUT THE INVENTION

The present invention relates to a process for producing a β-SiAlON, which includes a mixing step of mixing a raw material powder containing silicon, aluminum and europium, a calcining step of calcining the mixed raw material under an atmosphere of an inert gas or a non-oxidizing gas to produce a β-SiAlON represented by the general formula: Si_{6-z}Al_{z}O_{z}N_{8-z} : Eu (0 < z < 4.2), an annealing step of annealing the calcined β-SiAlON, the annealing being performed under a reducing atmosphere that is a reduced atmosphere of at least 0.15 MPa to a pressurized atmosphere up to 10 MPa, at an atmospheric temperature of at least 1200°C to no higher than 1600°C, for a treatment time of at least 1 hr to no longer than 24 hr.

In a case of the temperature of the atmosphere in the calcining step being low at less than 1800°C, it may be difficult to provide adequate fluorescence intensity. For this reason, it is preferable for the temperature of the atmosphere during calcining to be at least 1850°C.

The reason for establishing the atmosphere in the annealing step as a reducing atmosphere is because the reducing gas acts on crystal defects in which the electrical neutrality of the β-SiAlON is not maintained locally, whereby the crystallinity improves. The fluorescence intensity of the β-SiAlON will rise by an improvement in crystallinity.

The reducing gas is composed of any one or a mixture of ammonia gas, hydrocarbon gas, carbon monoxide gas and hydrogen gas, and thereamong, hydrogen gas, which has a small molecular size, is preferable due to being effective in crystallinity improvement.

The reducing gas may be mixed with inert gas. Inert gas is a noble gas of the 18^{th} group of chemical elements of the Periodic Table or nitrogen, and argon and helium can be exemplified as the noble gas. In the case of the reducing atmosphere being a mixed gas, and the reducing gas therein being hydrogen, the concentration of the reducing gas in the mixed gas is preferably at least 1% by volume due to a crystallinity improvement being hard to achieve if too low.

Although the characteristic improving effect in the annealing step is exhibited in a broad range of atmospheric pressures from reduced to pressurized, a pressure lower that 1 kPa is not preferable due to the reducing effect from the atmosphere being low, the characteristic not improving significantly, as well as decomposition of β-SiAlON being promoted. In addition, by pressurizing the atmosphere, it is possible to broaden other conditions (lower temperature, shorten time) required for causing the annealing effect to be exhibited; however, even if the atmospheric pressure is too high, the annealing effect will reach a peak, and especially costly annealing equipment will become necessary; therefore, when considering mass productivity, the pressure is no more than 10 MPa and preferably less than 1 MPa.

The atmospheric temperature in the annealing step is at least 1200°C and no higher than 1600°C due to the crystallinity improving effect lowering when too low, and the β-SiAlON decomposing when too high.

The treatment time during the annealing step is at least 1 hr and no longer than 24 hr, and preferably at least 2 hr and no longer than 10 hr, due to the crystallinity improving effect being low when too short, and the annealing effect reaching a peak when too long.

After the annealing step, the characteristics of the phosphor further improve by performing an acid treatment step of soaking the β-SiAlON in an acid solution.

The acid treatment step preferably includes steps of soaking the β-SiAlON in an acid solution, separating the β-SiAlON and acid with a filter or the like, and water rinsing the separated β-SiAlON. It is possible to remove the degraded product of β-SiAlON crystals producing during the annealing step by way of the acid treatment, whereby the fluorescence characteristic improves. As the acid used in the acid treatment, one or a mixture of hydrofluoric acid, sulfuric acid, phosphoric acid, hydrochloric acid and nitric acid can be exemplified, and a mixed acid composed of hydrofluoric acid and nitric acid suited to the removal of degraded product is preferable. Although the temperature of the acid solution during the acid treatment is not of concern even if room temperature, in order to raise the effect of the acid treatment, it is preferable to heat to at least 50°C and no higher than 90°C.

The β-SiAlON after the calcining step is agglomerated; therefore, it is preferable to make a powder of a predetermined size by crushing, pulverizing and, depending on the case, a classification operation on this. In order to suitably use β-SiAlON as a luminescent body for white LEDs, it is preferable to set the average particle size to 6 to 30 µm. A step of adjusting the average particle size of the β-SiAlON may be performed at a time after any of the calcining step, annealing step and acid treatment step of the present invention.

### EXAMPLES

Examples according to the present invention will be explained in detail while comparing with Comparative Examples.

In the present example, a mixing step of mixing raw material powder containing silicon, aluminum and europium; a calcining step of calcining the mixed raw materials under an atmosphere of inert gas or non-oxidizing gas to produce a β-SiAlON represented by the general formula: Si_{6-z}Al_{z}O_{z}N_{8-z}:Eu (0 < z < 4.2), and an annealing step to anneal the calcined β-SiAlON were performed.

### Mixing Step

The mixing step is a step of kneading, as the raw material powders, α-silicon nitride (SN-E10 grade, 1.0% by mass oxygen content made by Ube Industries, Ltd.), aluminum nitride powder (F grade, 0.8% by mass oxygen content made by Tokuyama Corp.), aluminum oxide powder (TM-DAR grade made by Taimei Chemicals Co., Ltd.), and europium oxide powder (RU grade made by Shin-Etsu Chemical Co., Ltd.). The blending ratio during kneading was designed so that z became 0.24 in the general formula of the β-SiAlON: Si_{6-z}Al_{z}O_{z}N_{8-z}, excluding europium oxide, and the europium oxide was 0.8% by mass of the overall raw material.

In the mixing step, these raw material powders were mixed by a wet-ball mill using a pot and balls made of silicon nitride, and ethanol as a solvent. After mixing, the solvent was removed and then drying was performed, after which the raw material was obtained by removing aggregates by passing through a 150-µm mesh sieve.

### Calcining Step

In the calcining step, the obtained raw material was filled into a cylindrical vessel made of boron nitride with a lid (N-1 grade made by Denki Kagaku Kogyo Kabushiki Kaisha), and placed in an electric furnace with a carbon heater in a pressurized nitrogen atmosphere at 0.85 MPa under an environment at 2000°C for 14 hr to produce a β-SiAlON.

The produced β-SiAlON is a loosely packed agglomerate. For this reason, after the produced β-SiAlON was crushed slightly, it was crushed with a supersonic jet crusher (PJM-80SP made by Nippon Pneumatic Mfg. Co., Ltd.) to make into powder form.

### Annealing Step

The annealing step filled the β-SiAlON into the cylindrical vessel made of boron nitride, and was performed in an electric furnace in which the inside of the furnace of tungsten heaters was made entirely of metal (furnace internal components configured by high melting-point metals of tungsten and molybdenum). After setting the β-SiAlON in the electric furnace, the inside of the electric furnace was evacuated to no more than 5 Pa, the temperature was raised at 20°C/min up to 1000°C in a vacuum state, and then hydrogen gas was introduced into the electric furnace to reach 0.15 MPa inside of the electric furnace. Hydrogen gas was further introduced into the electric furnace, and while keeping the atmospheric pressure constant, the temperature was raised at 5°C/min up to 1500°C, maintained at 1500°C for 4 hr, after which the inside of the electric furnace was cooled to room temperature.

### Acid Treatment Step

The acid treatment was performed on the annealed β-SiAlON with an acid solution that was a mixed acid of hydrofluoric acid and nitric acid. The temperature of the acid solution was set to 70°C. This acid treated β-SiAlON was allowed to settle, the supernatant and fine powder were removed, and decantation of further adding distilled water, agitating and leaving to stand, and removing the supernatant and fine powder was repeated until the solution became neutral, then the finally obtained precipitate was filtered and dried to obtain the β-SiAlON of Example 1.

Powder X-ray diffraction (XRD) measurement using Cu-Kα radiation was performed on the obtained β-SiAlON, a result of which the crystal phase was a β-salon single phase. The average particle size obtained using a particle size distribution measuring device of laser diffraction scattering method was 13.5 µm.

The fluorescence characterization of the β-SiAlON of Example 1 was performed by measuring the fluorescence spectrum under blue-light excitation (wavelength of 455 nm) using a spectrofluorometer (F7000) made by Hitachi High-Technologies Corp. The obtained fluorescence spectrum is shown in FIG. 1.

Annealing conditions and fluorescence peak intensities are shown in Table 1.

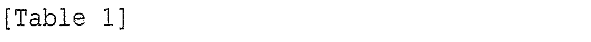

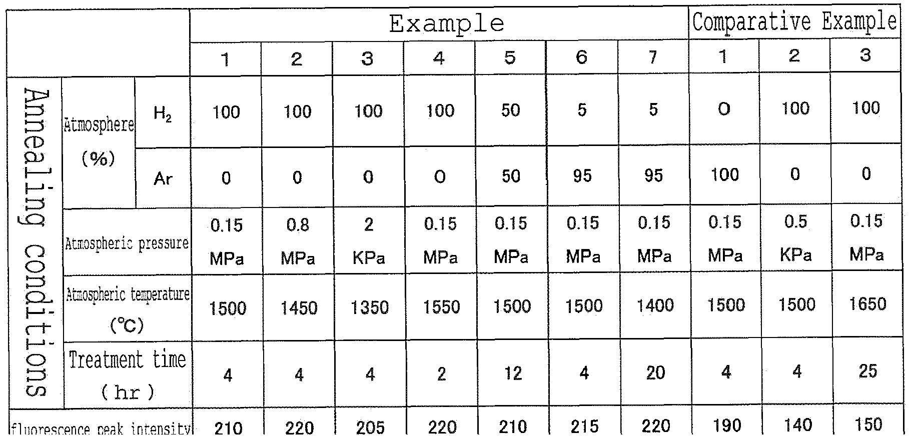

Example 3 represents background art not falling under the invention.

It was found to be preferable for the atmosphere in the annealing step to be under a reducing atmosphere containing reducing gas, at an atmospheric pressure of at least 1 kPa, an atmospheric temperature of at least 1200°C and no higher than 1600°C, and for a treatment time of at least 1 hr to no longer than 24 hr, and the reducing atmosphere to be hydrogen gas.

### Comparative Example 1

In Comparative Example 1, β-SiAlON was produced by the entirely the same method as Example 1, except for establishing the atmosphere in the annealing step with argon gas. In the results of the XRD measurement, the crystalline phase was a β-SiAlON single phase, and the average particle size obtained by the particle size distribution measuring device was 13.8 µm.

For the obtained β-SiAlON, the fluorescence spectrum measured by the same method as Example 1 is shown in FIG. 1. The fluorescence spectrum changes according to the measuring device and conditions; therefore, measuring was done at the same conditions as Example 1 without a time interval since the measurement of Example 1. As shown in FIG. 1, the fluorescence intensity improved by establishing the atmosphere with reducing hydrogen gas in the annealing step after calcining.

### Comparative Examples 2 and 3

In Comparative Example 2, β-SiAlON was produced similarly to Example 1, except for setting the atmospheric pressure in the annealing step to lower than 1 kPa at 0.5 kPa. For Comparative Example 3, β-SiAlON was produced similarly to Example 1, except for setting the temperature in the annealing step to higher than 1600°C at 1650°C. In both cases, partial decomposition of the β-SiAlON progressed in the annealing step, whereby the fluorescence characteristic drastically declined. Examples 2 to 5

In Examples 2 to 5, β-SiAlON was produced at entirely the same conditions as Example 1, except for the points indicated in Table 1.

The fluorescent peak intensities of Examples 2 to 5 were all higher than Comparative Example 1.

Although not listed in the table, when replacing the reducing gas of Example 1 with each of ammonia gas, hydrocarbon gas and carbon monoxide gas, β-SiAlON having substantially the same fluorescence spectrum as Example 1 could be produced.

### INDUSTRIAL APPLICABILITY

The β-SiAlON obtained according to the present invention is excited by a broad range of wavelengths from ultraviolet to blue light, and exhibits green luminescence of high luminance, and thus can be suitably used as a luminescent body of a white LED serving as a blue or ultraviolet light source.

## Claims

1. A process for producing a β-SiAlON phosphor, comprising:
a mixing step of mixing a raw material powder containing silicon, aluminum and europium;
a calcining step of calcining the raw material thus mixed under at atmosphere of inert gas or non-oxidizing gas to produce a β-SiAlON represented by the general formula: Si_{6-z}Al_{z}O_{z}N_{8-z} : Eu (0 < z < 4.2) ;
an annealing step of annealing the β-SiAlON thus produced; and
an acid treatment step of soaking the β-SiAlON thus annealed in an acid solution,
wherein the annealing is performed under a reducing atmosphere at an atmospheric pressure of at least 0.15 MPa and no higher than 10 MPa, an atmospheric temperature of at least 1200°C and no higher than 1600°C, and for a treatment time of at least 1 hr and no longer than 24 hr.

2. The process according to claim 1, wherein the reducing atmosphere is hydrogen gas.

3. The process according to claim 1, wherein the reducing atmosphere is a mixed gas of reducing gas and inert gas, and a hydrogen gas concentration in the mixed gas is at least 1% by volume.

4. The process according to any one of claims 1 to 3, wherein the acid solution in the acid treatment step is a mixed acid containing at least hydrofluoric acid and nitric acid.

5. The process according to any one of claims 1 to 4, wherein calcining is performed in an atmosphere at a temperature of at least 1850°C.

## Patentansprüche

1. Verfahren zum Herstellen eines β-SiAlON-Phosphors, umfassend:
einen Mischungsschritt, in dem ein Ausgangsmaterialpulver, das Silizium, Aluminium und Europium enthält, gemischt wird;
einen Kalzinierungsschritt, in dem das so gemischte Ausgangsmaterial in einer Atmosphäre aus Inertgas oder nichtoxidierendem Gas kalziniert wird, um ein β-SiAlON herzustellen, dass durch folgende allgemeine Formel dargestellt ist: Si_{6-z}Al_{z}O_{z}N_{8-z} : Eu (0 < z < 4,2);
einen Glühschritt, in dem das so hergestellte β-SiAlON geglüht wird; und
einen Säurebehandlungsschritt, in dem das so geglühte β-SiAlON in eine Säurelösung getaucht wird,
wobei das Glühen in einer reduzierenden Atmosphäre bei einem Atmosphärendruck von mindestens 0,15 MPa und höchstens 10 MPa, einer Atmosphärentemperatur von mindestens 1200°C und höchstens 1600°C und mit einer Behandlungszeit von mindestens 1 h und höchstens 24 h durchgeführt wird.

2. Verfahren nach Anspruch 1, wobei die reduzierende Atmosphäre Wasserstoffgas ist.

3. Verfahren nach Anspruch 1, wobei die reduzierende Atmosphäre ein Mischgas aus reduzierendem Gas und Inertgas ist und eine Wasserstoffgaskonzentration in dem Mischgas mindestens 1 Volumen-% beträgt.

4. Verfahren nach einem der Ansprüche 1 bis 3, wobei die Säurelösung in dem Säurebehandlungsschritt eine Mischsäure ist, die mindestens Flusssäure und Salpetersäure enthält.

5. Verfahren nach einem der Ansprüche 1 bis 4, wobei das Kalzinieren in einer Atmosphäre bei einer Temperatur von mindestens 1850°C durchgeführt wird.

## Revendications

1. Procédé de production de phosphore de β-SiAlON, comprenant : une étape de mélange, mélangeant une poudre de matériau brut contenant du silicium, de l'aluminium et de l'europium ;
une étape de calcination, calcinant le matériau brut mélangé ainsi, sous atmosphère de gaz inerte ou de gaz non oxydant pour produire du β-SiAlON, représenté par la formule générale : Si_{6-z}Al_{z}O_{z}N_{8-z} : Eu (0 < z < 4,2) ;
une étape de recuit, recuisant le β-SiAlON produit de la sorte ; et
une étape de traitement à l'acide, trempant le β-SiAlON recuit ainsi dans une solution acide,
le recuit étant effectué sous atmosphère réductrice, à une pression atmosphérique d'au moins 0,15 MPa et non supérieure à 10 MPa, une température atmosphérique d'au moins 1 200 °C et non supérieure à 1 600 °C, et pour un temps de traitement d'au moins 1 heure et non supérieur à 24 heures.

2. Procédé selon la revendication 1, l'atmosphère réductrice étant de l'hydrogène gazeux.

3. Procédé selon la revendication 1, l'atmosphère réductrice étant un mélange gazeux de gaz réducteur et de gaz inerte, et une concentration d'hydrogène gazeux dans le mélange gazeux étant d'au moins 1 % volumique.

4. Procédé selon l'une quelconque des revendications 1 à 3, la solution acide au cours de l'étape de traitement à l'acide étant un acide mixte contenant au moins de l'acide fluorhydrique et de l'acide nitrique.

5. Procédé selon l'une quelconque des revendications 1 à 4, la calcination étant effectuée dans une atmosphère, à une température d'au moins 1 850 °C.
